(19) Europäisches Patentamt / European Patent Office / Office européen des brevets

(11) **EP 4 045 260 B1**

(12) **EUROPÄISCHE PATENTSCHRIFT**

(45) Veröffentlichungstag und Bekanntmachung des Hinweises auf die Patenterteilung:
**09.10.2024   Patentblatt 2024/41**

(21) Anmeldenummer: **20792957.1**

(22) Anmeldetag: **13.10.2020**

(51) Internationale Patentklassifikation (IPC):
*B29C 44/06* (2006.01)   *B29C 44/08* (2006.01)
*B29C 37/00* (2006.01)   *B29C 44/44* (2006.01)
*B29C 41/08* (2006.01)   *B29C 41/18* (2006.01)
*B29C 41/20* (2006.01)   *B29C 41/22* (2006.01)
*B29C 41/36* (2006.01)   *B29C 41/46* (2006.01)
*B29C 44/34* (2006.01)   *B29K 25/00* (2006.01)
*B29K 75/00* (2006.01)   *B29K 105/04* (2006.01)
*B29L 9/00* (2006.01)

(52) Gemeinsame Patentklassifikation (CPC):
**B29C 44/06; B29C 37/0032; B29C 44/08;**
B29C 44/3415; B29C 44/445; B29C 2037/0039;
B29K 2023/06; B29K 2025/06; B29K 2075/00;
B29K 2105/04; B29K 2105/048; B29L 2009/005

(86) Internationale Anmeldenummer:
**PCT/EP2020/078784**

(87) Internationale Veröffentlichungsnummer:
**WO 2021/074153 (22.04.2021 Gazette 2021/16)**

(54) **VERFAHREN ZUM HERSTELLEN EINES GESCHÄUMTEN KUNSTSTOFFFORMKÖRPERS MIT EINEM FILMSCHICHTÜBERZUG**

METHOD OF MANUFACTURING A FOAMED PLASTIC MOLDED BODY WITH A FILM LAYER COVERED

PROCEDE DE FABRICATION D'UN CORPS MOULE EN PLASTIQUE MOUSSE AVEC UNE COUCHE DE FILM RECOUVERTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2019   DE 102019127756**

(43) Veröffentlichungstag der Anmeldung:
**24.08.2022   Patentblatt 2022/34**

(73) Patentinhaber:
• **Kaneka Belgium NV**
  **2260 Westerlo-Oevel (BE)**
• **Thorsten, Michel**
  **56355 Lautert (DE)**

(72) Erfinder:
• **NAEGELS, Patrick**
  **2260 Westerlo-Oevel (BE)**
• **MICHEL, Thorsten**
  **56355 Lautert (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
WO-A1-2017/109079   DE-A1- 10 033 877
GB-A- 2 300 588   GB-A- 2 460 838
GB-A- 2 494 484   JP-A- S63 312 248
US-A1- 2006 151 911

## Beschreibung

Die Erfindung betrifft ein Verfahren zum Herstellen eines geschäumten Kunststoffkörpers mit einem Filmschichtüberzug unter Nutzung einer Werkzeugform mit mindestens einer Werkzeugkavität zur Bildung eines formgebenden Formhohlraums.

Aus dem Stand der Technik sind Herstellungsverfahren als auch eine einteilige oder mehrteilige Werkzeugform zur Herstellung eines Formkörpers aus geschäumtem Kunststoff bekannt. Bei den bekannten Verfahren wird in der einteiligen oder mehrteiligen Werkzeugform umfassend mindestens eine Werkzeugkavität zur Bildung eines formgebenden Formhohlraums der Formhohlraum mit expandierbaren Partikeln und/oder Schaumstoffperlen gefüllt und mit einem unter Druck stehenden Wasserdampf solcher Temperaturen und Feuchte durchströmt, dass die Partikel und/oder Schaumstoffperlen in dem Formhohlraum expandieren und miteinander verschweißen (dieses Verfahren wird auch als Dampfkammerverfahren bezeichnet). Weiterhin ist es aus dem Stand der Technik bekannt, über zwei gegenüberliegende Werkzeughälften und die Innenseiten der Formkavitäten den formgebenden Formhohlraum zu beheizen und darauffolgend die expandierbaren Partikel und/oder Schaumstoffperlen in den Formhohlraum einzufüllen, welche die Wärmeenergie über die beheizten Formkavitäten aufnehmen und sich in dem Formhohlraum expandieren und miteinander unter Bildung eines geschäumten Kunststoffformkörpers verschmelzen. Der Formhohlraum, welcher über die mindestens eine Werkzeugkavität der Werkzeugform definiert wird, ist bestimmend für die Geometrie des herzustellenden geschäumten Kunststoffformkörpers. Der in der Werkzeugform hergestellte Kunststoffformkörper kann nach dem Abkühlen über ein Öffnen der Werkzeugform aus der Werkzeugform ausgeworfen werden bzw. aus dieser ausgeformt werden.

Eine derartige Vorrichtung sowie ein Verfahren zur Herstellung eines geschäumten Kunststoffformkörpers sind beispielsweise aus der DE 10 2009 006 507 B3 bekannt geworden.

Die bisher aus dem Stand der Technik bekannten geschäumten Kunststoffformkörper verfügen nach Abschluss des vorbeschriebenen Herstellungsprozesses nicht über eine geschlossene bzw. durchgängige Oberfläche. Vielmehr sind an der Oberfläche der geschäumten Kunststoffformkörper aufgrund des Expansionsverfahrens noch Mikrokavitäten vorhanden, in welche beispielsweise Fluide eintreten können. Weiterhin nachteilig ist, dass die Kunststoffformkörper aufgrund der vorgenannten Kavitäten keine geschlossene ebene Oberflächenstruktur aufweisen und sich damit nicht unmittelbar für eine Lackierung der Formkörper zum Einsatz beispielsweise in der Automobiltechnik eignen.

Weiterhin verfügen die bisher bekannten geschäumten Kunststoffformkörper lediglich über die Farbe des expandierten bzw. des geschäumten Kunststoffgranulates, welches als Ausgangsmaterial genutzt wird. Für bestimmte Einsatzbereiche, beispielsweise der Lebensmittelindustrie, aber auch für den Bereich der Automobiltechnik, ist es eine Forderung, die geschäumten Kunststoffformkörper mit einer geschlossenen Oberfläche mit einer geringen Rauigkeit herzustellen um die Formkörper unmittelbar lackieren zu können und beispielsweise als Stoßstange in einem Kraftfahrzeug einsetzen zu können.

Aus dem Stand der Technik ist es bereits bekannt, die vorgenannten geschäumten Kunststoffformkörper mittels zusätzlicher Folienschichten zu überziehen, um somit eine geschlossene und ebene Oberfläche für den Stoffformkörper zu erhalten, wobei bei den bisherigen Herstellungsverfahren nachteilig ist, dass die vorgenannten Kunststofffolien in einem separaten Arbeitsschritt auf die geschäumten Kunststoffformkörper aufgebracht werden müssen.

Aus der GB 2 494 484 A ist ein Verfahren zum Formen von Kunststoff aus einem teilchenförmigen Kunststoffmaterial und einem wärmeaktivierten, expandierbaren Schaumstoff-Füllmaterial bekannt geworden, das die folgenden Schritte umfasst: (i) Bereitstellen eines ersten und eines zweiten Formteils; (ii) Erhitzen der Formteile zumindest an ihren Flächenabschnitten auf eine Temperatur von etwa 100 bis etwa 500 Grad Celsius, um die Teilchen schmelz- oder sinterfähig zu machen; (iii) Inkontaktbringen der Formteile mit Kunststoffteilchenmaterial; (iv) Inkontaktbringen des expandierbaren Schaumkunststoff-Füllmaterials mit den Teilchen; (v) Schmelzen oder Sintern zumindest eines Teils der Kunststoffteilchen auf jedem Formteil zu einer geformten Haut von etwa 0. 001 cm bis 3,0 cm; (vi) Zusammenbringen der erhitzten Formteile, so dass die Wärme der erhitzten Formteile den expandierbaren Schaumstoff aktiviert, um ein Verbund-Sandwich zu bilden.

Die JP S63 312248 A beschreibt die Herstellung eines Teils für einen Fahrzeuginnenraum, der durch Laminieren einer Haut aus einem synthetischen Harz, einer geschäumten Schicht und eines faserhaltigen geschichteten Basismaterials hergestellt wird, die miteinander verbunden und in eine vorbestimmte Form gebracht werden.

Die GB 2 460 838 A offenbart eine Maschine und ein Verfahren zum Formen von Kunststoffartikeln und umfasst ein Paar gelenkig miteinander verbundener Hohlformen, die beheizt und gekühlt werden und die zusammengeklemmt werden können. Das Verfahren beinhaltet das Einbringen eines Kunststoffteilchenmaterials in jede Form, wenn sie sich in der offenen Position befinden, und das Erhitzen der Formen, um eine Kunststoffhaut zu bilden, die jede Form auskleidet. Anschließend wird ein expandierbares Füllmaterial in eine Form eingefüllt und die beiden Formen werden geschlossen, um einen vollständig geschlossenen Hohlraum zu bilden. Die Kunststoffhäute in den beiden Formen verbinden sich miteinander und bilden eine durchgehende Kunststoffschale, die das Füllmaterial vollständig umschließt.

Aus der DE 100 33 877 A1 ist ein Verfahren zur Herstellung von Formteilen in einer Form bekannt geworden, wobei die Formteile aus Partikelschaum aus Polymerschaumpartikeln hergestellt werden, die mindestens eine Polymerdeckschicht umfassen. Die Partikel sind zumindest oberflächlich miteinander verschmolzen und bilden eine geschlossene Oberfläche.

Ausgehend von dem zuvor aufgeführten Stand der Technik ist es die Aufgabe der vorliegenden Erfindung, ein vereinfachtes Herstellungsverfahren zur Herstellung eines geschäumten Kunststoffformkörpers mit einem Filmschichtüberzug vorzuschlagen, welches kostengünstiger und unter reduzierter Herstellungszeit durchführbar ist und womit weiterhin die Eigenschaften des Kunststoffformkörpers gezielt auf den beabsichtigten Einsatzzweck einstellbar sind.

Erfindungsgemäß gelöst wird die Aufgabe der vorliegenden Erfindung durch ein Herstellungsverfahren zur Herstellung eines geschäumten Kunststoffformkörpers mit einem Filmschichtüberzug und der Nutzung einer Werkzeugform mit mindestens einer Werkzeugkavität zur Bildung eines formgebenden Formhohlraums umfassend die Verfahrensschritte:

A) Aufheizen mindestens einer Werkzeugkavität der Werkzeugform;
B) Aufbringen eines Granulates auf die mindestens eine aufgeheizte Werkzeugkavität;
C) Aufschmelzen des Granulats in der aufgeheizten Werkzeugkavität zur Ausbildung einer flüssigen Filmschicht;
D) Aufbringen der flüssigen Filmschicht auf einen geschäumten Kunststoffformkörper zur Bildung eines Filmschichtüberzuges auf der Oberfläche des Kunststoffformkörpers durch Verschmelzen der flüssigen Filmschicht mit der Oberfläche des Kunststoffformkörpers; sowie
E) Abkühlen der Werkzeugkavität und Auswerfen des mit der Filmschicht überzogenen Kunststoffformkörpers.

Im Verfahrensschritt E) wird die Werkzeugform und insbesondere die aufgeheizte mindestens eine Werkzeugkavität der Werkzeugform auf die Entformungstemperatur heruntergekühlt und darauffolgend der Kunststoffformkörper mit Filmschichtüberzug aus der Werkzeugform als Werkzeug fallendes Bauteil ausgeworfen bzw. ausgeformt. Bei dem im Verfahrensschritt B) aufgebrachten Granulat handelt es sich um das gewünschte Material, aus welchem der auszubildende Filmschichtüberzug für den geschäumten Kunststoffformkörper gebildet wird. In dem Verfahrensschritt A) erfolgt das Aufheizen der mindestens einen Werkzeugkavität auf zumindest die Schmelztemperatur des im Verfahrensschritt B) aufgebrachten Granulates zur Ausbildung einer flüssigen Filmschicht im Verfahrensschritt C), welche aus dem ausgeschmolzenen Granulat gebildet wird. Die Temperatur der mindestens einen Werkzeugkavität wird erfindungsgemäß während der Durchführung des Verfahrens derart geführt bzw. gesteuert werden, dass diese während des gesamten Zeitraums der Durchführung zumindest der Verfahrensschritte B) bis D) im Wesentlichen zumindest oberhalb der Schmelztemperatur des aufgebrachten Granulates liegt.

Das erfindungsgemäße Verfahren weist den Vorteil auf, dass ein geschlossener Filmschichtüberzug auf dem Kunststoffformkörper unter Nutzung der bereits vorhandenen Werkzeuge, insbesondere der mehrteiligen Werkzeugformen, hergestellt werden kann. Die bisher gemäß Stand der Technik notwendigen zusätzlichen Vorrichtungen zur Aufbringung insbesondere einer Kunststofffolienschicht oder Textilschichten mit einem Kunststofflayer zur Realisierung eines Überzuges auf dem Kunststoffformkörper werden dabei obsolet. Insbesondere ist bei dem erfindungsgemäßen Verfahren vorteilhaft, dass dieses nahtlos in den bereits vorhandenen Produktionsprozess des Herstellungsverfahrens eingebunden bzw. unmittelbar an diesen angeschlossen werden kann, was eine deutliche Zeitersparnis bzw. Effektivitätssteigerung mit sich bringt. Durch das Aufschmelzen des Granulats im Verfahrensschritt C) wird eine kontinuierliche Filmschicht aus dem Granulatwerkstoff mit einer definierten Filmschichtdicke in der aufgeheizten Werkzeugkavität ausgebildet, wobei die kontinuierliche Filmschicht im aufgeschmolzenen bzw. flüssigen Zustand in der aufgeheizten Werkzeugkavität nach Abschluss des Verfahrensschrittes C) vorliegt. Die aufgeschmolzene Filmschicht wird dabei im Verfahrensschritt D) im flüssigen Zustand auf den geschäumten Kunststoffformkörper zumindest anteilig auf dessen Oberfläche zur Bildung eines geschlossenen Filmschichtüberzuges auf der Oberfläche des Kunststoffformkörpers aufgebracht und verschmilzt bzw. erstarrt unmittelbar auf der bisherigen Oberfläche des Kunststoffformkörpers. Die Filmschicht kann dabei die gesamte Oberfläche des geschäumten Kunststoffformkörpers oder alternativ lediglich partielle Oberflächenteilbereiche des Kunststoffformkörpers als geschlossene Filmschicht überdecken. Das erfindungsgemäße Verfahren hat weiterhin den Vorteil, dass keine Grate an dem hergestellten Kunststoffformkörper entstehen, womit keine Nacharbeit mehr an den hergestellten Fertigteilen beispielsweise zum Entfernen eines Angusses oder eines überstehenden Grates erforderlich ist.

Erfindungsgemäß kann es vorgesehen sein, dass vor der Durchführung der Verfahrensschritte A) bis E) in der Werkzeugform initial der eigentliche Kunststoffformkörper über ein Schäum- bzw. Expansionsverfahren hergestellt wird, wie dieses beispielsweise aus dem Stand der Technik bekannt ist, anschließend die Werkzeugform geöffnet wird, wobei der geschäumte Kunststoffformkörper mindestens einer ersten Werkzeugkavität verbleibt und die Verfahrensschritte A) bis E) darauffolgend an mindestens einer zweiten gegenüberliegenden Werkzeugkavität durchgeführt werden, wobei das Aufbringen der Filmschicht gemäß Verfahrensschritt D) durch ein erneutes Schließen der Werkzeugform um den bereits expandierten Kunststoffformkörper erfolgt und das Abkühlen im Verfahrensschritt E) der mindestens einen Werkzeugkavität im geschlossenen Formzustand erfolgt. Die vorgenannte Ausführungsform des erfindungsgemäßen Herstellungsverfahrens weist den Vorteil auf, dass die Herstellung des Filmschichtüberzugs unmittelbar anschließend an das bereits aus dem Stand der Technik bekannte Verfahren zur Herstellung von geschäumten Kunststoffformkörpern über die bekannten Expansionsverfahren realisiert wird und wobei die Aufbringung der Filmschicht unter Nutzung der bereits vorhandenen Werkzeugform erfindungsgemäß ermöglicht wird. Aufgrund des unmittelbar an die Herstellung des Kunststoffformkörpers anschließende Erzeugung und Aufbringung der Filmschicht kann eine gute Anbindung bzw. Haftung der Filmschicht an dem Kunststoffformkörper realisiert werden, da zwischenzeitliche Verunreinigungen der Anbindungsoberfläche des Kunststoffformkörpers vermieden werden.

Der Kunststoffformkörper kann dabei über ein Expansionsverfahren in dem Hohlraum der Werkzeugform unter Nutzung von allen aufschäumbaren Partikelschäume wie beispielsweise: EPS (expandierbares Polystyrol), EPP (expandierbares Polypropylen), EPE (expandierbares Polyethylen), expandierbares thermoplastisches Polyurethan (E-TPU) und Graphit oder Kohlenstoff enthaltendes Polystyrol hergestellt werden. In einer alternativen Ausführungsform des Herstellungsverfahrens kann es ebenfalls vorgesehen sein, den Kunststoffformkörper über ein Expansionsverfahren in einer ersten Werkzeugform herzustellen und darauffolgend die erfindungsgemäßen Verfahrensschritte an einer zweiten Werkzeugform vorzunehmen.

In einer weiterhin bevorzugten Ausführungsform des erfindungsgemäßen Herstellungsverfahrens kann es vorgesehen sein, dass im Bereich der mindestens einen Werkzeugkavität zunächst die Verfahrensschritte A) bis C) durchgeführt werden, anschließend die Werkzeugform geschlossen wird, und der Formhohlraum der Werkzeugform mit einem ersten expandierbaren Kunststoffgranulat bzw. Schaumstoffperlen befüllt wird und anschließend das erste expandierbare Kunststoffgranulat bzw. die Schaumstoffperlen in dem Formhohlraum expandiert werden, wobei der Verfahrensschritt D) dadurch erfolgt, dass der Kunststoffformkörper gegen die auf der mindestens einen Werkzeugkavität gebildeten flüssigen Filmschicht expandiert wird und mit dieser unmittelbar verschmilzt.

Besonders bevorzugt kann dabei vorgesehen werden, dass der Expansionsprozess des ersten expandierbaren Kunststoffgranulates vorzeitig abgebrochen bzw. vorzeitig nach einer definierten Zeitdauer gestoppt wird, wodurch lediglich ein Anteil des Kunststoffgranulates bzw. der Schaumstoffperlen expandiert werden. Der noch nicht verschmolzene bzw. nicht expandierte Anteil des ersten Kunststoffgranulates wird darauffolgend aus dem Formhohlraum entfernt, wodurch lediglich eine Schicht des ersten expandierten Kunststoffgranulates an der Filmschicht anhaftet. Der erhaltene Zwischenartikel kann in dem Formhohlraum zur Durchführung weiterer Bearbeitungsschritte belassen oder aus diesem ausgeformt werden.

Bevorzugt kann bei Belassung des Zwischenartikels in dem Formhohlraum nach dem Entfernen des nicht expandierten Anteils des ersten Kunststoffgranulates der Formhohlraum mit einem zweiten expandierbaren Kunststoffgranulat bzw. Schaumperlen befüllt werden, welche anschließend zur Bildung des Kunststoffformkörpers expandiert werden. Durch das beschriebene Verfahren kann ein Kunststoffformkörper hergestellt werden, welcher über eine Filmschicht verfügt, wobei unterhalb dieser Filmschicht eine Schicht von ersten expandierten Kunststoffpartikeln bzw. Schaumperlen eines ersten Werkstoffes vorliegt, welche mit der Filmschicht verschmolzen bzw. an dieser angebunden ist und darunterliegend eine zweite Schicht von zweiten expandierten Kunststoffpartikeln bzw. Schaumstoffperlen vorliegt, welche aus einem zweiten Werkstoff gebildet ist und welche zumindest mit der ersten Schicht verbunden bzw. an diese angebunden ist. Das beschriebene Verfahren ermöglicht es, einen Kunststoffformkörper herzustellen, der aus zwei unterschiedlichen aufgeschäumten Granulaten besteht.

Bevorzugt werden mindestens zwei unterschiedliche expandierbare Kunststoffgranulate mit unterschiedlichen Werkstoffeigenschaften für den Herstellungsprozess genutzt. In einer ersten beispielhaften Ausführungsform kann das erste expandierbare Kunststoffgranulat derart gewählt werden, dass dieses einen lokalen Schaumkörper mit einer geringen Dichte bei einer gleichzeitig hohen Elastizität ergibt und das zweite Granulat einen lokalen Schaumkörper mit einer gegenüber dem ersten expandierbaren Kunststoffgranulat höheren Dichte und geringerer Elastizität ergibt. In der Konsequenz kann ein resultierender geschäumter Kunststoffformkörper erhalten werden, welcher unterhalb des Filmschichtüberzuges im Bereich der Oberfläche eine weiche und dehnbare Oberfläche aufweist, wobei der untere lokale Schaumbereich strukturell stabil und unverformbar ist.

In einer alternativen Ausführungsform kann das erste expandierbare Kunststoffgranulat über eine höhere Steifigkeit und eine höhere Dichte als das zweite expandierbare Kunststoffgranulat aufweisen, derart, dass ein Artikel mit sehr steifer Oberfläche bei gleichzeitig reduziertem Gewicht erhalten werden kann. Die Vorsehung einer ersten Schaumstoffschicht, gebildet aus einem expandierbaren Kunststoffgranulat mit einer hohen Steifigkeit und gleichzeitig hohen Dichte, weist den Vorteil auf, dass Filmschichtüberzüge mit einer geringen Filmdicke realisiert werden können.

Durch gezielte Auswahl des ersten und zweiten expandierbaren Kunststoffgranulates können die resultierenden lokalen Eigenschaften der Schaumschichten, welche den Kunststoffformkörper bilden, gezielt beeinflusst werden. Weiterhin kann es vorgesehen sein, dass durch Wiederholung des Verfahrens mehr als zwei unterschiedliche expandierbare Kunststoffgranulate zur Bildung des Kunststoffformkörpers verwendet werden. In einer bevorzugten Ausführungsform kann es dementsprechend vorgesehen werden bei Belassung des Zwischenartikels in dem Formhohlraum nach dem Entfernen eines nicht expandierten Anteils des ersten Kunststoffgranulates den Formhohlraum mit mindestens zwei weiteren expandierbaren Kunststoffgranulaten bzw. Schaumperlen zu befüllen, welche anschließend zur Bildung des Kunststoffformkörpers expandiert werden. Wobei jeweils der Expansionsprozess des weiteren expandierbaren Kunststoffgranulates vorzeitig abgebrochen bzw. vorzeitig nach einer definierten Zeitdauer gestoppt werden, wodurch lediglich ein Anteil des weiteren Kunststoffgranulates bzw. der Schaumstoffperlen expandiert werden. Der noch nicht verschmolzene bzw. nicht expandierte Anteil des weiteren Kunststoffgranulates kann wiederum darauffolgend aus dem Formhohlraum entfernt werden, wodurch Schichten definierten Dicken der weiteren expandierten Kunststoffgranulate erzeugbar sind. Durch das beschriebene Verfahren wird es ermöglicht einen Kunststoffformkörper herzustellen, welcher über eine Filmschicht verfügt, wobei unterhalb dieser Filmschicht eine Schicht von ersten expandierten Kunststoffpartikeln bzw. Schaumperlen eines ersten Werkstoffes vorliegt, welche mit der Filmschicht verschmolzen bzw. an dieser angebunden ist und darunterliegend eine beliebige Anzahl weiterer Schichten von weiteren expandierten Kunststoffpartikeln bzw. Schaumstoffperlen vorliegt, welche aus weiteren Werkstoffen gebildet werden können und welche zumindest mit der ersten Schicht verbunden bzw. an diese angebunden ist. Das beschriebene Verfahren ermöglicht es, einen Kunststoffformkörper mit einer Filmschicht und einer beliebigen Anzahl von darunterliegen Lagen von expandierten Kunststoffpartikeln herzustellen. Es kann folglich ein sogenannter Multilayerformkörper mit insbesondere 3 bis 6 Schichten erzeugt werden.

Weiterhin kann es vorgesehen werden, dass das Granulat im Verfahrensschritt B) über den Bereich der mindestens einen Werkzeugkavität hinaus auf die Oberfläche der mehrteiligen Werkzeugform aufgebracht wird und dass mindestens ein Teil der mehrteiligen Werkzeugform einen Dichtring umfasst, welcher beim Schließen der Werkzeugform das Granulat außerhalb des Bereiches der mindestens einen Werkzeugkavität zu einer Wulst im Randbereich der mindestens einen ersten und/oder zweiten Werkzeugkavität aufwirft. Der Dichtring ist an einem ersten Teil der Werkzeugform angeordnet und überstreicht beim Schliessen der Werkzeugform den umliegenden Bereich der gegenüberliegenden Werkzeugkavität des mindestens einen zweiten Teils der Werkzeugform. Bei dem vorgenannten Überstreichen wird das außerhalb der Werkzeugkavität aufgebrachte Granulat im aufgeschmolzenen Zustand durch die Bewegung des Dichtrings relativ zu der gegenüberliegenden Werkzeugkavität zusammengeschoben und bildet eine die gegenüberliegende Werkzeugkavität begrenzende Wulst aus. Damit wird bei der Aufbringung eines Filmschichtüberzuges lediglich auf einer anteiligen Oberfläche des Kunststoffformkörpers eine sichtbare Kante am Ende des Filmschichtüberzuges verhindert. Weiterhin wird die umlaufende Kante des Filmschichtüberzuges mittels der Wulst besser an den Schaumkörper angebunden, derart, dass ein Ablösen in den Randbereichen des Filmschichtüberzuges vermieden werden kann. Besonders bevorzugt ist die dem Dichtring gegenüberliegende Werkzeugform konisch ausgestaltet, derart, dass der Dichtring besser in die gegenüberliegende Werkzeugform einführbar ist.

Weiterhin bevorzugt kann es erfindungsgemäß vorgesehen sein, dass das Granulat für den Filmschichtüberzug im Verfahrensschritt B) mittels einer Sprühpistole auf die mindestens eine Werkzeugkavität aufgebracht wird.

Gemäß einer weiterhin bevorzugten Ausführungsform des erfindungsgemäßen Herstellungsverfahrens kann es vorgesehen sein, dass die mindestens eine aufzuheizende Werkzeugkavität im Verfahrensschritt A) die Einleitung eines Heizmediums über entsprechende Heizkanäle in der mindestens einen Werkzeugkavität aufgeheizt wird. Als Heizmedium können beispielsweise aufgeheiztes Öl, Wasser oder ein Wasserdampfgemisch zugeführt werden.

Alternativ kann die mindestens eine Werkzeugkavität durch mindestens eine aktive Heizeinrichtung aufgeheizt werden, wie beispielsweise ein elektrisches Heizelement, wie insbesondere ein Widerstandsheizelement, ein Kaltleiterelement, oder ein induktives Heizelement.

Bevorzugt kann es auch vorgesehen werden, die mindestens eine Werkzeugkavität direkt mit einer externen Wärmequelle, wie beispielsweise einem Heizluftstrom, zu erwärmen.

Gemäß einer weiteren Ausführungsform kann die mindestens eine Werkzeugkavität über eine Strahlungsheizung, wie beispielsweise einen Infrarotstrahler, aufgeheizt werden oder alternativ ebenfalls über mindestens einen Heizbrenner aufgeheizt werden.

Weiterhin kann es vorgesehen sein, dass im Verfahrensschritt A) die mindestens eine aufzuheizende Werkzeugkavität mindestens eine Temperatur oberhalb der Schmelztemperatur des aufgebrachten Granulates, insbesondere auf eine Temperatur im Bereich von 80°C bis 260°C, aufgeheizt wird.

Gemäß einer bevorzugten Ausführungsform kann es vorgesehen sein, dass im Verfahrensschritt B) ein pulverförmiges thermoplastisches Kunststoffgranulat auf die mindestens eine Werkzeugkavität aufgebracht wird. Das thermoplastische Kunststoffgranulat kann dann über die Aufheizung der Werkzeugkavität zum Aufschmelzen gebracht werden, wodurch in der Werkzeugkavität eine durchgängige aufgeschmolzene Schicht des thermoplastischen Kunststoffes vorliegt.

Die Granulate können auch mit Zusatzstoffen vermischt und in die mindestens eine Werkzeugkavität aufgetragen werden. Als granulierte Zusatzstoffe könnten insbesondere Glasfasern und/oder Carbonfasern genutzt werden.

Erfindungsgemäß kann es vorgesehen werden dass während oder nach Durchführung des Verfahrensschrittes C) zumindest in Teilbereiche der Oberfläche der mindestens einen Werkzeugkavität eine Lage eines Vlies oder eines Textils, wie eines Gewebes oder Gewirkes eingelegt und bevorzugt in die flüssige Filmschicht eingebettet bzw. durch diese durchtränkt wird. Besonders bevorzugt können die eingelegten Lage definierte Außenkonturen und Abmessungen aufweisen.

Besonders bevorzugt kann ein thermoplastisches Kunststoffgranulat mit einer definierten RAL-Farbe auf die mindestens eine Werkzeugkavität aufgebracht werden, wodurch ein Filmüberzug in einer gewünschten definierten RAL-Farbe herstellbar ist. Weiterhin können Kunststoffgranulate mit besonderen Eigenschaften verwendet werden, wie beispielsweise mit dissipativen Eigenschaften, Flammbeständigkeit, Lebensmitteleignung, Resistenz gegen UV-Strahlung, Resistenz gegen Hitze, gesteigerte Wasserdichtigkeit, erhöhte Durchschlagsfestigkeit, erhöhte Abriebsfestigkeit. Weiterhin kann für den Filmschichtüberzug ein Kunststoff genutzt werden, welcher einen stoffschlüssigen Verbund mit dem Kunststoffformkörper bildet. Hierdurch wird es ermöglicht, den hergestellten Kunststoffformkörper weiterhin gezielt mit gewünschten Eigenschaften auszugestalten.

Erfindungsgemäß kann es auch vorgesehen werden, dass der Kunststoffformkörper als auch der Filmschichtüberzug aus dem gleichen thermoplastischen Kunststoff zur Realisierung eines Monomaterialverbundes verwendet werden, so kann beispielsweise eine Kombination der Kunststoffe PP mit EPP oder PS mit EPS zur Verwendung kommen. Aufgrund des Monomaterialverbundes kann der hergestellte Kunststoffformkörper mit Filmschichtüberzug aufgrund des einheitlichen Materials besser recycelt werden.

Weiterhin kann erfindungsgemäß mindestens eine Werkzeugkavität mit einer definierten Oberflächentextur genutzt werden, welche ein definiertes Oberflächenmerkmal der Filmschicht bewirkt. Beispielsweise kann die Oberfläche des Filmschichtüberzuges mit definierten Texturen, extrem glatten bzw. rauen Oberflächen mit definierten Rauigkeiten oder Klettoberflächen ausgestattet werden.

Gemäß einer besonders bevorzugten Ausführungsform des erfindungsgemäßen Herstellungsverfahrens ist es vorgesehen, dass im Verfahrensschritt B) ein pulverförmiges Polypropylen (PP) auf die mindestens eine Werkzeugkavität aufgebracht wird.

Gemäß einer weiterhin besonders bevorzugten Ausführungsform kann es vorgesehen sein, dass im Verfahrensschritt B) lediglich auf definierte Teilbereiche der mindestens einen Werkzeugkavität anteilig Granulat zur Ausbildung mindestens einer bereichsweisen Filmschicht aufgebracht wird, wobei insbesondere Teilbereiche der mindestens einen Werkzeugkavität abgedeckt werden können, um dort im Verfahrensschritt B) einen Granulatauftrag zu verhindern.

Weiterhin bevorzugt kann es vorgesehen sein, dass in unterschiedlichen Teilbereichen der Werkzeugkavität das Granulat mit definierten unterschiedlichen Schichtdicken aufgebracht wird, derart, dass ein Filmschichtüberzug mit lokal unterschiedlichen Filmschichtdicken auf dem geschäumten Kunststoffformkörper herstellbar ist. Durch das vorgenannte Verfahren wird es erstmals ermöglicht, gezielt Oberflächenbereiche mit unterschiedlichen Festigkeiten bzw. auch Biegesteifigkeiten in dem Filmschichtüberzug zu realisieren. Insbesondere wird es ermöglicht, in der Oberfläche geschwächte Bereiche einzubringen, welche beispielsweise bei Verwendung des Kunststoffformkörpers im Kraftfahrzeugbereich ein definiertes Verformungsverhalten, beispielsweise im Anstoßfall, bewirken.

Insbesondere kann es vorgesehen sein, dass im Verfahrensschritt B) auf die Werkzeugkavität ein Granulat mit einer Schichtdicke im Bereich von 0,05 mm bis 2 mm aufgebracht wird. Die Schichtdicke des Granulates kann dabei in Abhängigkeit von dem darunterliegenden expandierten Kunststoffgranulat getroffen werden.

Gemäß einer weiterhin bevorzugten Ausführungsform kann es vorgesehen sein, dass im Verfahrensschritt E) die mindestens eine abzukühlende Werkzeugkavität konvektiv und/oder konduktiv gekühlt wird.

Gemäß einer besonders bevorzugten Ausführungsform kann es vorgesehen sein, dass im Verfahrensschritt E) die mindestens eine abzukühlende Werkzeugkavität gekühlt wird, in dem ein Kühlmedium durch Kanäle der mindestens einen Werkzeugkavität geleitet wird. Bei dem zugeführten Kühlmedium kann es sich beispielsweise um eine Kühlflüssigkeit, insbesondere um Öl, Kühlluft oder Kühlwasser, handeln.

Alternativ kann es vorgesehen sein, dass im Verfahrensschritt E) die mindestens eine abzukühlende Werkzeugkavität gekühlt wird, indem ein Kühlmedium über mindestens eine Düseneinrichtung mindestens eine abzukühlende Werkzeugkavität aufgesprüht wird, insbesondere kann vorgesehen sein, dass Wasser im flüssigen Zustand über mehrere Düseneinrichtungen, insbesondere zerstäubende Düsen, auf die abzukühlende mindestens eine Werkzeugkavität aufgesprüht wird.

Erfindungsgemäß kann es weiterhin vorgesehen sein, dass die Temperatur der mindestens einen im Verfahrensschritt A) aufzuheizenden Werkzeugkavität mittels eines Temperatursensors überwacht wird. Mittels des Temperatursensor können ebenfalls bevorzugt die gewünschten Prozesstemperaturen während des gesamten Herstellungsverfahrens bzw. in definierten Verfahrensschritten überwacht und in Abhängigkeit der Messwerte gezielt gesteuert werden.

Weiterhin kann es vorgesehen sein, dass mit dem Temperatursensor die Zufuhr von Heizmedium bzw. alternativ die elektrischen Düseneinrichtungen gesteuert werden können.

Insbesondere kann es bevorzugt vorgesehen sein, dass zur Fertigung des geschäumten Kunststoffformkörpers nach Durchführung der Verfahrensschritte A) bis C) in die geschlossene Werkzeugform mindestens ein Partikelschaumgranulat über mindestens eine Injektoreinrichtung in die Werkzeugform zugeführt wird. Die Werkzeugform kann über mehrere Injektoreinrichtungen auch lokal mit unterschiedlichen expandierbaren Kunststoffgranulaten befüllt werden.

Weiterhin kann es erfindungsgemäß vorgesehen werden, die Verfahrensschritte A) bis C) an mindestens einer externen Werkzeugkavität durchzuführen, welche über eine Verschiebung mit der Werkzeugform im Verfahrensschritt D) und E) zur Bildung des Formhohlraums zusammengeführt wird. Beispielsweise kann ein Drehtellerwerkzeug mit mehreren Werkzeugkavitäten erfindungsgemäß verwendet werden.

Nachfolgend werden einige Beispiele des erfindungsgemäßen Herstellungsverfahrens ausgeführt.

Beispiele 1, 2 und 3:

Ein quadratisches Werkzeug mit den Abmessungen 370 × 370 × 60 mm wurde verwendet, um Platten nach dem Dampfkammerverfahren auf Basis von EPP - expandierten Polypropylenschaumpartikeln (Handelsbezeichnung Eperan-PP VB45, M30 und VB15 von Kaneka Belgium N.V.) herzustellen. Die Platten wurden 24 Stunden in einem Ofen bei 80°C stabilisiert und bei Umgebungsbedingungen (23°C - 50% relative Luftfeuchtigkeit) gelagert. Eine kreisförmige Heizplatte wurde elektrisch auf eine Temperatur von 220°C erhitzt, ein Granulat (Polypropylen "Gray EX1Y 1876" von Axalta Coating Systems GmbH) wurde auf die erhitzte Platte gesprüht und aufgeschmolzen. Die EPP-Platte wurde auf die Schicht aus geschmolzenem Granulat gepresst, die Platte mittels Luft abgekühlt und als Ergebnis hat man ein filmbeschichtetes geschäumtes Kunststoffteil erhalten.

Beispiele 4 und 5:

Eine Kavität eines Werkzeuges zur Herstellung von Schüsseln (Beispiel 4) und eine Kavität eines Werkzeuges zur Herstellung einer A-Säulenverkleidung für Fahrzeuge (Beispiel 5) wurden mit der Variotherm-Technologie auf 185°C bzw. 180°C erhitzt. Bei der Variotherm-Technologie handelt es sich um ein Heiz- und Kühlsystem, mit dem die Temperatur in allen Bereichen eines Werkzeugs präzise geregelt werden kann. Hierbei muss die Werkzeugkavität nicht zwangsläufig in die Dampfkammer der Formmaschine integriert sein. Auf die erhitzte Kavität wurde ein Granulat (Polypropylen "Black EX1Y 1886" bzw. "EX1Y 1886 Blue 565" der Axalta Coating Systems GmbH) aufgesprüht und aufgeschmolzen. Das Werkzeug wurde geschlossen und die Kavität wurden mit EPP - expandierten Polypropylenschaumpartikeln (Warenzeichen "Eperan-PP MN20" und "Eperan-PP VB 20" von Kaneka Belgium N.V.) gefüllt und das Dampfkammerverfahren wurde angewandt. In beiden Fällen konnte ein geschäumtes Kunststoffteil gefertigt werden, das teilweise in den gewünschten Bereichen zu 100 % mit einer Filmschicht bedeckt war.

Beispiele 6, 7, 8, 9, 10 und 11:

Werkzeuge zur Herstellung einer Schüssel (Beispiele 6, 7) und einer A-Säulenverkleidung für Fahrzeuge (Beispiele 8, 9, 10, 11) wurden verwendet, um geschäumte Kunststoffteile nach dem Dampfkammerverfahren herzustellen, basierend auf EPP - Schaumpartikeln aus expandiertem Polypropylen (Warenzeichen Eperan-PP VB30, VB20, M30 und MN20 von Kaneka Belgium N.V.). Am Ende des Zyklus wurde das Teil jedoch nicht ausgeworfen und verblieb in einer Kavität. Die andere Kavität wurde mittels Variotherm-Technologie auf 180 bis 185°C erwärmt. Auf die Oberfläche der beheizten Kavität wurde ein Granulat (Polypropylen "Black EX1Y 1886" und " EX1Y 1886 Blue 565 " der Axalta Coating Systems GmbH) aufgesprüht und aufgeschmolzen. Das Werkzeug wurde wieder geschlossen und abgekühlt. In beiden Fällen konnte ein geschäumtes Kunststoffteil gefertigt werden, das teilweise in den gewünschten Bereichen zu 100 % mit einer Filmschicht bedeckt war.

Beispiele 12 und 13

Eine A-Säulenverkleidung eines Fahrzeuges wurde nach dem Dampfkammerverfahren hergestellt, basierend auf EPP - expandierten Polypropylenschaumpartikeln (Warenzeichen Eperan-PP VB20 und M30 von Kaneka Belgium N.V.). Die A-Säulenverkleidung wurde 24 Stunden in einem Ofen bei 80°C stabilisiert und bei Umgebungsbedingungen (23°C - 50% relative Luftfeuchtigkeit) gelagert. Eine Kavität der A-Säulenverkleidung wurde mittels Variotherm-Technologie auf 180°C erwärmt, ein Granulat (Polypropylen "Black EX1Y 1886" der Axalta GmbH) auf die beheizte Kavität aufgesprüht und aufgeschmolzen. Die geschäumte A-Säulenverkleidung wurde auf die Schicht aus geschmolzenem Granulat gedrückt, die Platte wurde abgekühlt und ein geschäumtes Kunststoffteil mit einer Filmbeschichtung konnte gefertigt werden. Diese Methode hat sich für kleine Serien als sehr praktisch erwiesen.

Beispiel 14:

Die Kavität der A-Säulenverkleidung wurde mittels Variotherm-Technologie auf 180°C erwärmt, ein Granulat (Polypropylen "Black EX1Y 1886" der Axalta Coating Systems GmbH) wurde auf die beheizte Kavität gesprüht und aufgeschmolzen. Das Werkzeug mit der heißen Kavität wurde geschlossen und expandierte Polypropylenschaumpartikel (Warenzeichen EPERAN-PP M30 von Kaneka Belgium N.V.) vom Typ X wurden in das Werkzeug gefüllt, die dann teilweise an der geschmolzenen Filmschicht hängen blieben und eine erste Schicht mit niedriger Dichte (weich) bildeten. Die nicht anhaftenden, überschüssigen Schaumpartikel wurden aus der Kavität abgesaugt. Schaumpartikel vom Typ Y (Marke EPERAN-PP VB20 von Kaneka Belgium NV) wurden in das Werkzeug gefüllt und das Dampfkammerverfahren wurde angewandt. Es konnte ein geschäumtes Kunststoffteil gefertigt werden, das teilweise in den gewünschten Bereichen zu 100 % mit einer Folienschicht bedeckt war. Durch den Einsatz von Typ X und Typ Y konnten darüber hinaus zwei Schichten mit unterschiedlicher Dichte (weich und hart) realisiert werden.

Beispiel 15:

Die Kavität der A-Säulenverkleidung wurde mittels Variotherm-Technologie auf 180°C erwärmt, ein Granulat (Polypropylen "Black EX1Y 1886" der Axalta Coating Systems GmbH) wurde auf die beheizte Kavität gesprüht und aufgeschmolzen. Das Werkzeug mit der heißen Kavität wurde geschlossen und expandierte Polypropylenschaumpartikel (Warenzeichen EPERAN-PP M30 von Kaneka Belgium N.V.) vom Typ X wurden in das Werkzeug gefüllt, die dann teilweise an der geschmolzenen Filmschicht hängen blieben und eine erste Schicht mit niedriger Dichte (weich) bildeten. Die Kavität wurde abgekühlt. Die nicht anhaftenden, überschüssigen expandierten Polypropylenschaumpartikel wurden aus dem Werkzeug abgesaugt und die Filmschicht mit der aus anhaftenden Schaumpartikeln vom Typ X gebildeten Schicht wurde dem Werkzeug entnommen und gelagert. Zu einem späteren Zeitpunkt wurde die Filmschicht mit angeschmolzener Schicht aus Schaumpartikeln wieder in ein Werkzeug eingelegt. Expandierte Polypropylenschaumpartikel vom Typ Y (Warenzeichen Eperan-PP VB20 von Kaneka Belgium NV) wurden in das Werkzeug eingeblasen und das Dampfkammerverfahren wurde angewendet. Es konnte ein geschäumtes Kunststoffteil gefertigt werden, das teilweise in den gewünschten Bereichen zu 100 % mit einer Folienschicht bedeckt war. Durch den Einsatz von Typ X und Typ Y konnten darüber hinaus zwei Schichten mit unterschiedlicher Dichte (weich und hart) realisiert werden.

**Tabelle 1: Beschreibung der Beispiele 1 bis 15 und des Vergleichsbeispiels 1**

| Beispiel | Gestalt | Vorgeschäumte Schaumpartikel | Methode | Formteildichte | Verwendetes Heizsystem | Heiztemperatur | Granulatbezeichnung | Dickenbereich der Filmbeschichtung | Abdeckung durch Filmbeschichtung | Prägung |
|---|---|---|---|---|---|---|---|---|---|---|
| Einheit | - | - | Tabelle 2 | g/l | - | °C | - | mm | % | - |
| Ex 1 | Platte | Eperan-PP VB45 | 3 | 20 | Elektrisch beheizte und luftgekühlte Platte | 220 | EX1Y 1876 Grau | 0,45 - 0,55 | 100 | Keine ungewollten Unebenheiten |
| Ex 2 | Platte | Eperan-PP M30 | 3 | 45 | Elektrisch beheizte und luftgekühlte Platte | 220 | EX1Y 1876 Grau | 0,45 - 0,55 | 100 | Keine ungewollten Unebenheiten |
| Ex 3 | Platte | Eperan-PP VB15 | 3 | 60 | Elektrisch beheizte und luftgekühlte Platte | 220 | EX1Y 1876 Grau | 0,45 - 0,55 | 100 | Keine ungewollten Unebenheiten |
| Ex 4 | Schüssel | Eperan-PP MN20 | 1 | 45 | Variotherm | 185 | EX1Y 1886 Schwarz | 0,65 - 0,85 | 100 | Keine ungewollten Unebenheiten |
| Ex 5 | A-Säule | Eperan-PP VB20 | 1 | 45 | Variotherm | 180 | EX1Y 1886 Blue 565 | 0,90 - 1,10 | 100 | Keine ungewollten Unebenheiten |
| Ex 6 | Schüssel | Eperan-PP MN20 | 2 | 45 | Variotherm | 185 | EX1Y 1886 Schwarz | 0,65 - 0,85 | 100 | Keine ungewollten Unebenheiten |
| Ex 7 | Schüssel | Eperan-PP VB30 | 2 | 30 | Variotherm | 185 | EX1Y 1886 Schwarz | 0,65 - 0,85 | 100 | Keine ungewollten Unebenheiten |
| Ex 8 | A-Säule | Eperan-PP M 30 | 2 | 30 | Variotherm | 180 | EX1Y 1886 Schwarz | 0,90- 1,10 | 100 | Keine ungewollten Unebenheiten |

| Beispiel | Gestalt | Vorge- schäumte Schaumpar- tikel | Methode | Formteildich- te | Verwen- detes Heizsystem | Heiztemper- atur | Granulatbezeich- nung | Dicken bereich der Filmbes- chichtung | Abdeckung du- rch Filmbes- chichtung | Prägung |
|---|---|---|---|---|---|---|---|---|---|---|
| **Ex 9** | A-Säule | Eperan-PP M3 0 | 2 | 30 | Variotherm | 180 | EX1Y 1886 Blue 565 | 0,90- 1,10 | 100 | Keine unge- wollten Un- ebenheiten |
| **Ex 10** | A-Säule | Eperan-PP VB 20 | 2 | 45 | Variotherm | 180 | EX1Y 1886 Schwarz | 0,90- 1,10 | 100 | Keine unge- wollten Un- ebenheiten |
| **Ex 11** | A-Säule | Eperan-PP VB 20 | 2 | 45 | Variotherm | 180 | EX1Y 1886 Blue 565 | 0,90- 1,10 | 100 | Keine unge- wollten Un- ebenheiten |
| **Ex 12** | A-Säule | Eperan-PP M 30 | 3 | 30 | Variotherm | 180 | EX1Y 1886 Schwarz | 0,90- 1,10 | 100 | Keine unge- wollten Un- ebenheiten |
| **Ex 13** | A-Säule | Eperan-PP VB20 | 3 | 45 | Variotherm | 180 | EX1Y 1886 Schwarz | 0,90- 1,10 | 100 | Keine unge- wollten Un- ebenheiten |
| **Ex 14** | A-Säule | Eperan-PP M30 (X) Eperan-PP VB2 0 (Y) | 4 | 30 (X) 4 5 (Y) | Variotherm | 180 | EX1Y 1886 Schwarz | 0,90- 1,10 | 100 | Keine unge- wollten Un- ebenheiten |
| **Ex 15** | A-Säule | Eperan-PP M30 (X) Eperan-PP VB2 0 (Y) | 5 | 30 (X) 4 5 (Y) | Variotherm | 180 | EX1Y 1886 Schwarz | 0,90- 1,10 | 100 | Keine unge- wollten Un- ebenheiten |
| Vergleichs- beispiel 1 | Platte | Eperan-PP VB30 | - | 30 | - | - | - | - | - | Präsenz von Microkavitäten |

Tabelle 2: Bei Muster Ex 1 bis Ex 15 angewandte Verfahren, um geschäumte Kunststoffteile mit einer Filmbeschichtung herzustellen:

| Verfahren | Schritt 1 | Schritt 2 | Schritt 3 | Schritt 4 | Schritt 5 | Schritt 6 | Schritt 7 | Schritt 8 | Schritt 9 |
|---|---|---|---|---|---|---|---|---|---|
| 1 | A: Aufheizen der Werkzeugkavität mittels Variotherm [1] | B + C: Aufsprühen [2] und Aufschmelzen des Granulats | Werkzeug schliessen | D: Aufbringen der Filmschicht im Schritt Dampf-kammerverfahren zur Herstellung geschäumter Kunststoffteile | E: Abkühlen und Auswerfen des geschäumten Kunststoffteils mit Filmbeschichtung | | | | |
| 2 | Dampfkammerverfahren zur Herstellung geschäumter Kunststoffteile | Öffnen des Werkzeuges ohne das geschäumte Kunststoffteil auszuwerfen | A: Aufheizen der Werkzeug-kavität mittels Variotherm [1] | B + C: Aufsprühen [2] und Aufschmelzen des Granulats | D: Werkzeug schliessen und den Film auf das geschäumte Kunststoffteil aufbringen | E: Abkühlen und Auswerfen des geschäumten Kunststoffteils mit Filmbeschichtung | | | |
| 3 | Dampfkammerverfahren zur Herstellung geschäumter Kunststoffteile | Stabilisieren des geschäumten Kunststoffteils im Ofen bei 80°C | Lagerung der geschäumten Kunststoffteile | A: Aufheizen der Werkzeug-kavität mittels Variotherm [1] | B + C: Aufsprühen [2] und Aufschmelzen des Granulats | D: Durch Pressung das zwischengelagerte geschäumte Kunststoffteil mit dem geschmolzenen Granulatfilm verbinden | E: Abkühlen und Auswerfen des geschäumten Kunststoffteils mit Filmbeschichtung | | |
| 4 | A: Aufheizen der Werkzeugkavität mittels Variotherm [1] | B + C: Aufsprühen [2] und Aufschmelzen des Granulats | Werkzeug schliessen | Befüllen des Werkzeuges mit Schaumpartikeln vom Typ X | Absaugen überschüssiger (nicht mit dem Film verbundener) Schaumpartikel vom Typ X | D: Dampf-kammerverfahren zur Herstellung geschäumter Kunststoffteile mit Schaumpartikeln vom Typ Y | E: Abkühlen und Auswerfen des geschäumten Kunststoffteils mit Filmbeschichtung | | |

(fortgesetzt)

| Verfahren | Schritt 1 | Schritt 2 | Schritt 3 | Schritt 4 | Schritt 5 | Schritt 6 | Schritt 7 | Schritt 8 | Schritt 9 |
|---|---|---|---|---|---|---|---|---|---|
| 5 | A: Aufheizen der Werkzeugkavität mittels Variotherm [1] | B + C: Aufsprühen [2] und Aufschmelzen des Granulats | Werkzeug schliessen | Befüllen des Werkzeuges mit Schaum-partikeln vom Typ X | Abkühlen der Kavität und Absaugen überschüssiger (nicht mit dem Film verbundener) Schaumpartikel und Entnahme des Films mit den durch Anschmelzen verbundenen Schaumpartikel vom Typ X | Lagerung der Filmschicht mit angeschmolzenen Schaumpartikeln vom Typ X | Einlegen der Filmschicht mit angeschmolzenen Schaumpartikel vom Typ X in ein Werkzeug | D: Dampf-kammerverfahren zur Herstellung geschäumter Kunststoffteile mit Schaumpartikel vom Typ Y | E : Abkühlen und Auswerfen des geschäumten Kunststoffteils mit Filmbeschichtung |

(1) Variotherm ist ein Heiz- und Kühlsystem, mit dem die Temperatur in allen Bereichen eines Werkzeugs präzise geregelt werden kann. Hierbei muss die Werkzeugkavität nicht zwangsläufig in die Dampfkammer der Formmaschine integriert sein .

(2) Sprühsystem der Nordson Deutschland GmbH: Pulver wird aus einem Vorrats- oder Aufgabehälter mittels Dense Phase Pump-Technologie zu einer Pulversprühpistole (Encore HD-System) überführt, die das Pulver mit oder ohne elektrostatische Aufladung aufträgt.

Das Aufschmelzen des Granulats kann auch auf einer Kavitätskopie vollflächig oder teilflächig ausserhalb der Formteilmaschine geschehen. Dies ermöglicht kürzere Zykluszeiten und darüber hinaus auch das Beschichten von dicken geschäumten Kunststoffteilen, wenn allseitig Dampfdüsen erforderlich sein sollten.

BEWERTUNGSMETHODEN

Dichte des Schaumstoffteils:

Die Formteildichte MD (g / l) des in Tabelle 3 angeführten geschäumten Kunststoffteils wurde berechnet, indem das Gewicht W1 (g / des geschäumten Kunststoffteils durch das Volumen V1 (L) des geschäumten Kunststoffteils geteilt wurde: MD = W1 / V1 (g / l)

Wasserdurchlässigkeit

Eine 1-% Seifenlösung auf Wasserbasis wurde hergestellt, indem 25 g Geschirrspülmittel (Warenzeichen "Dreft-Original" von Procter & Gamble) zu 2500 ml Wasser bei einer Temperatur von 25°C gegeben wurden.
Ein Schaumstoffteil in Form einer zylindrischen Schüssel hat ein Gesamtvolumen von 1600 ml. Die Innenfläche der Schüssel ist mit einer Filmschicht überzogen. Es hat einen offenen Durchmesser D von 190 mm und die Dicke des Bodens und der Wand betragen 10 mm. Die Schüssel wird bei Umgebungsbedingungen (23 ° C - 50% relative Luftfeuchtigkeit) gelagert und das Gewicht W2 (g) der Schüssel wird gemessen.
Ein Volumen V2 von 800 ml oder 800.000 mm$^3$, das 50% des Gesamtvolumens der Schüssel entspricht, der Seifendispersion wird in die Schüssel gegossen. Die Wassersäule in der Schüssel hat eine Höhe von 28.32 mm = 800.000/ (($\pi$*190$^2$)/4). Die Schüssel wird 24 Stunden bei Umgebungsbedingungen (23 ° C - 50% relative Luftfeuchtigkeit) gelagert.
Als nächstes wird die restliche Seifenlösung aus der Schüssel entfernt, die Innenfläche der Schüssel wird mit einem Papiertuch trockengerieben, und das "Nassgewicht" W3 (g) der Schüssel wird innerhalb von 5 Minuten nach dem Entfernen der Seifendispersion gemessen.
Die Wasserdurchlässigkeit WP wird als Prozentsatz der Gewichtszunahme der Schale ausgedrückt:

$$WP\ (\%) = (W3 - W2) / W2 * 100$$

Härte

Die Härte des geschäumten Kunststoffteils wird gemäß ASTM D2240 gemessen. Das Ergebnis wird als "Shore A" Wert angegeben.

Farbhomogenität

Die Farbe eines geschäumten Kunststoffteils mit und ohne Folienbeschichtung wird mit einem Gerät von BYK Gardner mit Farbkugelsystem gemessen, das auf dem CIElab- Farbsystem basiert. Das Ergebnis einer Farbmessung wird als Satz von L-, a * - und b * -Werten ausgedrückt.
Der L-Wert variiert von 0 bis 100, von Weiß bis Schwarz.
Der a * -Wert variiert von -127 bis +127, von grün bis rot.
Der b * -Wert variiert von -127 bis +127, von blau bis gelb.
An fünf verschiedenen Stellen einer Fläche von 20.000 mm$^2$ werden Farbmessungen durchgeführt und die durchschnittlichen L-, a * - und b * -Werte berechnet.
Der Farbunterschied zwischen 2 Messungen wird als $\Delta$ E dargestellt und wie folgt berechnet:

$$\Delta E^*_{ab} = \sqrt{(L^*_2 - L^*_1)^2 + (a^*_2 - a^*_1)^2 + (b^*_2 - b^*_1)^2}$$

Für jede einzelne Farbmessung $\Delta$ E $_i$ ist gegenüber dem Mittelwert berechnet L, a * und b * -Werten, mit i von 1 bis 5. Schließlich wird die variierende Gesamt $\Delta$ E als Mittelwert, der berechnet wird fünf $\Delta$ E $_i$ Werte.

Tabelle 3

| | Granulat | Zusammensetzung geschäumtes Kunststoffteil | Dichte geschäumtes Kunststoffteil (g / l) | Farbhomogenität (ΔE) | Härte (Shore A) | Wasserdurchlässigkeit (%) |
|---|---|---|---|---|---|---|
| Ex. 7 | Schwarz EX1Y 1886 | Eperan-PP VB30 | 30 | 0,22 | 97 | 0.0 |
| Vergleichsbeispiel | - | Eperan-PP MN20 | 45 | 0,77 | 42 | 5.5 |

Im Nachfolgenden werden unter Bezugnahme auf die beigefügten Zeichnungen bevorzugte Ausführungsbeispiele des erfindungsgemäßen Verfahrens erläutert. Es zeigen:

Figur 1     eine Schnittansicht durch eine Werkzeugform im geschlossenen Zustand;

Figur 2     eine Schnittansicht einer kavität während des Aufbringens von Granulat;

Figur 3     ein Ausführungsbeispiel einer Werkzeugform mit einem erfindungsgemäß hergestellten geschäumten Kunststoffform; sowie

Figur 4     ein weiteres Ausführungsbeispiel einer Werkzeugform mit einem externen Heizsystem.

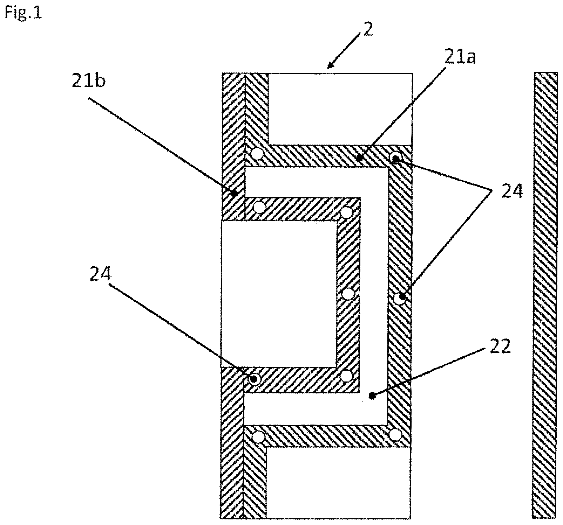

Die Figur 1 zeigt eine Schnittansicht einer Werkzeugform 2 im geschlossenen Zustand, wobei die Werkzeugform 2 durch zwei gegenüberliegende Werkzeugkavitäten 21a und 21b gebildet ist, wobei die vorgenannten gegenüberliegenden Werkzeugkavitäten 21a sowie 21b einen formgebenden Formhohlraum 22 umschließen. Die erste Werkzeugkavität 21a ist in dem dargestellten Ausführungsbeispiel mit einer Vielzahl von Heizkanälen 24 ausgestattet, worüber ein Heizmedium der ersten Werkzeugkavität 21a zuführbar ist, worüber die erste Werkzeugkavität 21a auf eine definierte Temperatur aufheizbar ist.

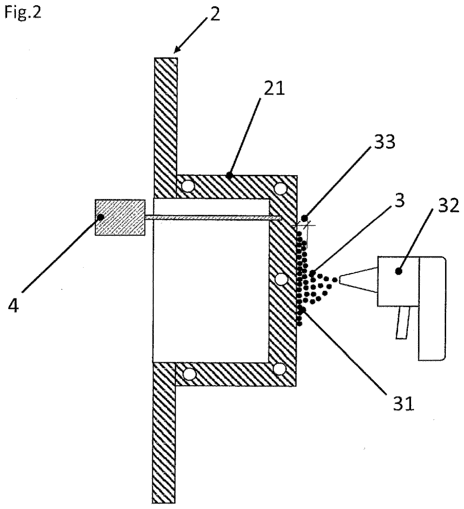

In der Figur 2 ist eine beispielhafte Ausführungsform einer Werkzeugkavität 21 einer Werkzeugform 2 dargestellt, wobei die dargestellte Werkzeugkavität einen Temperatursensor 4 umfasst, mittels dessen die Temperatur der Werkzeugkavität 21 messbar ist. In der Figur 2 ist der Prozess des Aufbringens des Granulates 3 mittels einer Sprühpistole 32 dargestellt, wobei das aufgebrachte Granulat im Bereich der Werkzeugkavität 21 eine Filmschicht 31 mit einer Filmschichtdicke 33 ausbildet. Wie dies ebenfalls der Figur 2 entnehmbar ist, sind durch gezieltes Aufbringen des Granulats 3 mittels der Sprühpistole 32 die Schichtdicken 33 des aufgetragenen Granulates 3 abschnittsweise in der Werkzeugkavität 21 einstellbar bzw. gezielt beeinflussbar.

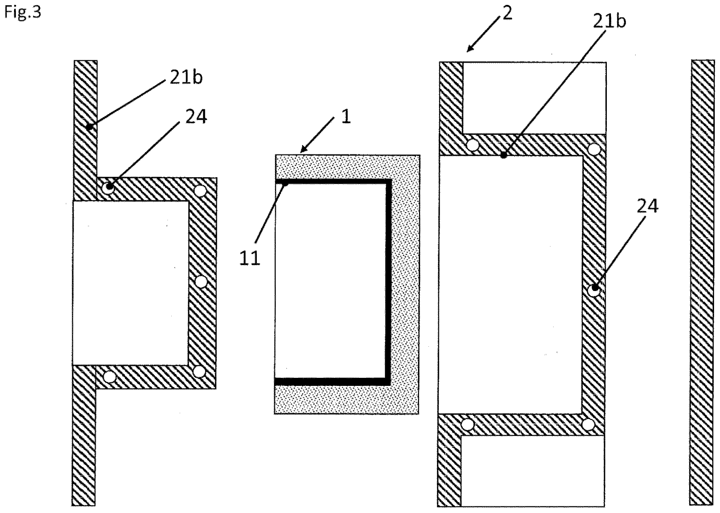

Die Figur 3 zeigt einen Kunststoffformkörper mit einem anteiligen Filmschichtüberzug 11, wobei der Schaumstoffformkörper unter Nutzung der Werkzeugform 2, welche aus einer ersten Werkzeugkavität 21a und einer zweiten gegenüberliegenden Werkzeugkavität 21b gebildet ist, worüber der Kunststoffformkörper hergestellt wurde, mittels Aufbringen von Kunststoffgranulat 3 auf die zweite Werkzeugkavität 21 wurde der Filmschichtüberzug 11 auf dem Kunststoffformkörper 1 erfindungsgemäß aufgebracht.

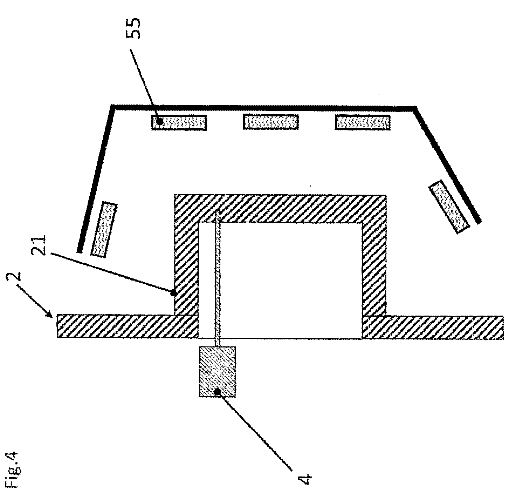

Die Figur 4 zeigt ein weiteres Ausführungsbeispiel einer Werkzeugkavität 21 mit einem Temperatursensor 4 und einer externen Wärmequelle 55 in Form von mehreren Heizstrahlern mit Richtungsblenden. Die Werkzeugkavität 21 kann mittels der externen Wärmequelle 55 auf eine definierte Temperatur aufgeheizt werden, der Sensor 4 kann zur Steuerung der Wärmequelle 55 verwendet werden.

**Patentansprüche**

1. Verfahren zum Herstellen eines geschäumten Kunststoffformkörpers (1) mit einem Filmschichtüberzug (11) unter Nutzung einer Werkzeugform (2) mit mindestens einer Werkzeugkavität (21) zur Bildung eines formgebenden Formhohlraums (22) umfassend die Verfahrensschritte:

    - A) Aufheizen mindestens einer Werkzeugkavität (21) der Werkzeugform (2);

    - B) Aufbringen eines Granulates (3) auf die mindestens eine aufgeheizte Werkzeugkavität (21);

    - C) Aufschmelzen des Granulates (3) in der aufgeheizten Werkzeugkavität (21) zur Ausbildung einer flüssigen Filmschicht (31);

    - D) Aufbringen der flüssigen Filmschicht (31) auf einen geschäumten Kunststoffformkörper (1) zur Bildung eines Filmschichtüberzuges (11) auf der Oberfläche des Kunststoffformkörpers (1) durch Verschmelzen der flüssigen Filmschicht (31) mit der Oberfläche des Kunststoffformkörpers (1);

    - E) Abkühlen der mindestens einen Werkzeugkavität (21) und Auswerfen des mit der Filmschicht (11) überzogenen Kunststoffformkörpers (1), wobei die Temperatur der mindestens einen Werkzeugkavität während der Durchführung des Verfahrens derart geführt bzw. gesteuert wird, dass diese während des gesamten Zeitraums der Durchführung zumindest der Verfahrensschritte B) bis D) zumindest oberhalb der Schmelztemperatur des aufgebrachten Granulates liegt.

2. Herstellungsverfahren nach Anspruch 1, **dadurch gekennzeichnet, dass** vor der Durchführung der Verfahrensschritte A) bis E) in der Werkzeugform (2) der Kunststoffformkörper (1) über ein Expansionsverfahren hergestellt wird, anschließend die Werkzeugform (2) geöffnet wird, wobei der Kunststoffformkörper (1) in mindestens einer ersten Werkzeugkavität (21a) verbleibt und die Verfahrensschritte A) bis E) darauffolgend an mindestens einer zweiten gegenüberliegenden Werkzeugkavität (21b) durchgeführt werden, wobei das Aufbringen der flüssigen Filmschicht (31) durch Verschmelzen der flüssigen Filmschicht (31) mit der Oberfläche des Kunststoffformkörpers (1) gemäß Verfahrensschritt D) durch ein erneutes Schließen der Werkzeugform (2) erfolgt und das Abkühlen im Verfahrensschritt E) der mindestens einen Werkzeugkavität (21) im geschlossen Formzustand erfolgt.

3. Herstellungsverfahren nach Anspruch 1 oder 2, **dadurch gekennzeichnet, dass** im Bereich der mindestens einen Werkzeugkavität (21a, 21b) zunächst die Verfahrensschritte A) bis C) durchgeführt werden, anschließend die Werkzeugform (2) geschlossen wird und der Formhohlraum (22) der Werkzeugform (2) mit einem ersten expandierbaren Kunststoffgranulat bzw. Schaumstoffperlen befüllt wird und anschliessend das erste Kunststoffgranulat bzw. die Schaumstoffperlen in dem Formhohlraum (22) expandiert werden, wobei der Verfahrensschritt D) dadurch erfolgt, dass der Kunststoffformkörper (1) bzw. das erste expandierbare Kunststoffgranulat bzw. die Schaumstoffperlen gegen die auf der mindestens einen Werkzeugkavität (21) gebildeten flüssigen Filmschicht (31) expandiert wird und mit dieser verschmilzt.

4. Herstellungsverfahren nach Anspruch 1 oder 2, **dadurch gekennzeichnet, dass** das Granulat (3) im Verfahrensschritt B) über den Bereich der mindestens einen Werkzeugkavität (21a, 21b) hinaus auf die mehrteilige Werkzeugform (2) aufgebracht wird und dass mindestens ein Teil der mehrteiligen Werkzeugform (2) einen Dichtring umfasst, welcher beim Schließen der Werkzeugform (2) das Granulat (3) außerhalb des Bereiches der mindestens einen ersten und/oder zweiten Werkzeugkavität (21a, 21b) zu einer Wulst im Randbereich der mindestens einen ersten und/oder zweiten Werkzeugkavität (21a, 21b) aufwirft.

5. Herstellungsverfahren nach Anspruch 3 oder 4, **dadurch gekennzeichnet, dass** im Verfahrensschritt der Expansion des ersten expandierbaren Kunststoffgranulats bzw. der Schaumstoffperlen der Expansionsprozess nach einer definierten Zeitdauer beendet wird und das noch nicht verschmolzene bzw. noch nicht expandierte erste Kunststoffgranulat bzw. die Schaumstoffperlen aus dem Formhohlraum (22) entfernt werden, derart, dass lediglich eine Schicht des ersten expandierten Kunststoffgranulats bzw. der Schaumstoffperlen an der Filmschicht (31) anhaftet.

6. Herstellungsverfahren nach Anspruch 5, **dadurch gekennzeichnet, dass** nach Entfernung der nicht expandierten Anteile des ersten Kunststoffgranulates bzw. der Schaumstoffperlen der Formhohlraum (22) mit einem zweiten expandierbaren Kunststoffgranulat bzw. Schaumstoffperlen befüllt wird und diese anschließend zur Bildung des Kunststoffformkörpers (1) expandiert wird.

7. Herstellungsverfahren nach einem der vorausgehenden Ansprüche, **dadurch gekennzeichnet, dass** das Granulat (3) im Verfahrensschritt B) mittels einer Sprühpistole (32) auf die mindestens eine Werkzeugkavität (21) aufgebracht wird.

8. Herstellungsverfahren nach einem der vorausgehenden Ansprüche, **dadurch gekennzeichnet, dass** die mindestens eine aufzuheizende Werkzeugkavität (21) im Verfahrensschritt A) über die Einleitung eines Heizmediums über entsprechende Heizkanäle (24) in der mindestens einen Werkzeugkavität (21) aufgeheizt wird.

9. Herstellungsverfahren nach einem der vorausgehenden Ansprüche, **dadurch gekennzeichnet, dass** im Verfahrensschritt A) die mindestens eine aufzuheizende Werkzeugkavität (21) auf mindestens eine Temperatur oberhalb der Schmelztemperatur des Granulates (3), insbesondere auf eine Temperatur im Bereich von 80°C bis 260°C, aufgeheizt wird.

10. Herstellungsverfahren nach einem der vorausgehenden Ansprüche, **dadurch gekennzeichnet, dass** im Verfahrensschritt B) ein pulverförmiges thermoplastisches Kunststoffgranulat (3) auf die mindestens eine Werkzeugkavität (21) aufgebracht wird.

11. Herstellungsverfahren nach einem der vorausgehenden Ansprüche, **dadurch gekennzeichnet, dass** die mindestens eine aufzuheizende Werkzeugkavität (21) im Verfahrensschritt A) über eine externe Heizquelle (55) aufgeheizt wird, welche zu der mindestens einen Werkzeugkavität (21) beabstandet angeordnet ist, wie insbesondere ein Heizstrahler.

12. Herstellungsverfahren nach einem der vorausgehenden Ansprüche, **dadurch gekennzeichnet, dass** im Verfahrensschritt B) lediglich auf definierte Teilbereiche der mindestens einen Werkzeugkavität (21) anteilig Granulat (3) zur Ausbildung mindestens einer bereichsweisen Filmschicht (31) aufgebracht wird, wobei insbesondere Teilbereiche der mindestens einen Werkzeugkavität (21) abgedeckt werden können, um dort im Verfahrensschritt B) einen Granulatauftrag zu verhindern.

**13.** Herstellungsverfahren nach einem der vorausgehenden Ansprüche, **dadurch gekennzeichnet, dass** im Verfahrensschritt B) auf die Werkzeugkavität (21) ein Granulat (3) mit einer Schichtdicke (33) im Bereich von 0,05 mm bis 2 mm aufgebracht wird.

**14.** Herstellungsverfahren nach einem der vorausgehenden Ansprüche, **dadurch gekennzeichnet, dass** im Verfahrensschritt E) die mindestens eine abzukühlende Werkzeugkavität (21) konvektiv und/oder konduktiv gekühlt wird.

**Claims**

**1.** A method for manufacturing a foamed plastic molded body (1) with a film layer coating (11) by using a tool mold (2) with at least one tool cavity (21) to form a shaping mold cavity (22), comprising the following method steps:

- A) heating at least one tool cavity (21) of the tool mold (2);
- B) applying a granulate (3) to the at least one heated tool cavity (21);
- C) fusing the granulate (3) in the heated tool cavity (21) to form a liquid film layer (31);
- D) applying the liquid film layer (31) to a foamed plastic molded body (1) to form a film layer coating (11) on the surface of the plastic molded body (1) by fusing the liquid film layer (31) with the surface of the plastic molded body (1);
- E) cooling the at least one tool cavity (21) and ejecting the plastic molded body (1) coated with the film layer (11), wherein the temperature of the at least one tool cavity is controlled or regulated, respectively, while performing the method such that said temperature is at least above the melting temperature of the applied granulate during the entire period of performing at least the method steps B) to D).

**2.** The method for manufacturing according to claim 1, **characterized in that**, before performing method steps A) to E), the plastic molded body (1) is produced in the tool mold (2) by an expansion method, then the tool mold (2) is opened, wherein the plastic molded body (1) remains in at least one first tool cavity (21a) and method steps A) to E) are then performed for at least one second opposite tool cavity (21b), wherein applying the liquid film layer (31) by fusing the liquid film layer (31) with the surface of the plastic molded body (1) is performed according to method step D) by closing the tool mold (2) again, and the cooling in method step E) of the at least one tool cavity (21) is performed in the closed molding condition.

**3.** The method for manufacturing according to claim 1 or 2, **characterized in that** the area of the at least one tool cavity (21a, 21b) first method steps A) to C) are performed, then the tool mold (2) is closed and the mold cavity (22) of the tool mold (2) is filled with a first expandable plastic granulate or with foam pearls, respectively, and then the first plastic granulate or the foam pearls, respectively, are expanded in the mold cavity (22), wherein method step D) is performed by the fact that the plastic molded body (1) or the first expandable plastic granulate or the foam pearls, respectively, is expanded against the liquid film layer (31) formed on the at least one tool cavity (21) and fuses therewith.

**4.** The method for manufacturing according to claim 1 or 2, **characterized in that** the granulate (3) is applied in method step B) beyond the region of the at least one tool cavity (21a, 21b) to the multi-part tool mold (2), and that at least one part of the multi-part tool mold (2) comprises a sealing ring which, when closing the tool mold (2), throws up the granulate (3) outside the region of the at least one first and/or second tool cavity (21a, 21b) to a bead in the edge area of the at one first and/or second tool cavity (21a, 21b).

**5.** The method for manufacturing according to claim 3 or 4, **characterized in that**, in the method step of the expansion of the first expandable plastic granulate or the foam pearls, respectively, the expansion process is terminated after a defined period of time, and the first plastic granulate or the foam pearls, respectively, which are not yet melted or expanded are removed from the mold cavity (22) such that only a layer of the first expanded plastic granulate or of the foam pearls, respectively, adheres to the film layer (31).

**6.** The method for manufacturing according to claim 5, **characterized in that** after removing the non-expanded proportions of the first plastic granulate or of the foam pearls, respectively, the mold cavity (22) is filled with a second expandable plastic granulate or with foam pearls, respectively, which are then expanded to form the plastic molded body (1).

**7.** The method for manufacturing according to any one of the preceding claims, **characterized in that** the granulate (3) is applied in method step B) by means of a spray pistol (32) to the at least one tool cavity (21).

8. The method for manufacturing according to any one of the preceding claims, **characterized in that** the at least one tool cavity (21) to be heated is heated in method step A) by introducing a heating medium through the corresponding heating channels (24) in the at least one tool cavity (21).

9. The method for manufacturing according to any one of the preceding claims, **characterized in that**, in method step A), the at least one tool cavity (21) to be heated is heated to at least a temperature above the melting temperature of the granulate (3), in particular to a temperature in the range of 80°C to 260°C.

10. The method for manufacturing according to any one of the preceding claims, **characterized in that**, in method step B), a powdery thermoplastic plastic granulate (3) is applied to the at least one tool cavity (21).

11. The method for manufacturing according to any one of the preceding claims, **characterized in that** the at least one tool cavity (21) to be heated is heated in method step A) by an external heating source (55) which is arranged to be spaced apart from the at least of tool cavity (21), such as in particular a radiant heater.

12. The method for manufacturing according to any one of the preceding claims, **characterized in that**, in method step B), granulate (3) is only proportionately applied to defined partial regions of the at least one tool cavity (21) to form at least one film layer (31) in certain areas, wherein in particular subregions of the at least one tool cavity (21) can be covered in order to prevent a granulate application in method step B).

13. The method for manufacturing according to any one of the preceding claims, **characterized in that**, in method step B), a granulate (3) is applied to the tool cavity (21) with a layer thickness (33) in the range of 0.05 mm to 2 mm.

14. The method for manufacturing according to any one of the preceding claims, **characterized in that**, in method step E), the at least one tool cavity (21) to be cooled is cooled convectively and/or conductively.

**Revendications**

1. Procédé pour la fabrication d'un corps moulé en plastique (1) expansé comportant un revêtement en couche de film (11) en utilisant un outil de moulage (2) comportant au moins une cavité d'outil (21) pour former un espace creux de moulage (22) de façonnage, comprenant les étapes de procédé consistant à :

   - A) chauffer au moins une cavité d'outil (21) de l'outil de moulage (2) ;
   - B) déposer un granulat (3) sur l'au moins une cavité d'outil (21) chauffée ;
   - C) faire fondre le granulat (3) dans la cavité d'outil (21) chauffée pour former une couche de film liquide (31) ;
   - D) déposer la couche de film liquide (31) sur un corps moulé en plastique (1) expansé pour former un revêtement en couche de film (11) sur la surface du corps moulé en plastique (1) par fusion de la couche de film liquide (31) avec la surface du corps moulé en plastique (1) ;
   - E) refroidir l'au moins une cavité d'outil (21) et éjecter le corps moulé en plastique (1) revêtu de la couche de film (11), dans lequel la température de l'au moins une cavité d'outil est guidée ou commandée pendant la réalisation du procédé de telle sorte que celle-ci se situe au moins au-dessus de la température de fusion du granulat déposé pendant toute la durée de la réalisation d'au moins les étapes de procédé B) à D).

2. Procédé de fabrication selon la revendication 1, **caractérisé en ce que,** avant la réalisation des étapes de procédé A) à E) dans l'outil de moulage (2), le corps moulé en plastique (1) est fabriqué par l'intermédiaire d'un procédé d'expansion, l'outil de moulage (2) est ensuite ouvert, dans lequel le corps moulé en plastique (1) reste dans au moins une première cavité d'outil (21a) et les étapes de procédé A) à E) sont ensuite réalisées au niveau d'au moins une seconde cavité d'outil (21b) opposée, dans lequel le dépôt de la couche de film liquide (31) est effectué par fusion de la couche de film liquide (31) avec la surface du corps moulé en plastique (1) conformément à l'étape de procédé D) par une nouvelle fermeture de l'outil de moulage (2) et le refroidissement à l'étape de procédé E) de l'au moins une cavité d'outil (21) est effectué à l'état de moule fermé.

3. Procédé de fabrication selon la revendication 1 ou 2,
   **caractérisé en ce que,** dans la zone de l'au moins une cavité d'outil (21a, 21b), les étapes de procédé A) à C) sont d'abord réalisées, puis l'outil de moulage (2) est fermé et l'espace creux de moulage (22) de l'outil de moulage (2) est rempli d'un premier granulat de plastique expansible ou de premières perles de mousse expansibles, et ensuite, le premier granulat de plastique ou les premières perles de mousse sont expansés dans l'espace creux de moulage (22), dans lequel l'étape de procédé D) est effectuée par le fait que le corps moulé en plastique (1) ou le premier granulat de plastique expansible ou les premières perles de mousse expansibles sont expansés contre la couche de film liquide (31) formée sur l'au moins une cavité d'outil (21) et fusionnent avec celle-ci.

4. Procédé de fabrication selon la revendication 1 ou 2,
   **caractérisé en ce que** le granulat (3) est déposé à l'étape de procédé B) au-delà de la zone de l'au moins une cavité d'outil (21a, 21b) sur l'outil de moulage (2) en plusieurs parties et **en ce qu'**au moins une partie de l'outil de moulage (2) en plusieurs parties comprend une bague d'étanchéité qui, lors de la fermeture de l'outil de moulage (2), soulève le granulat (3) à l'extérieur de la zone de l'au moins une première et/ou seconde cavité d'outil (21a, 21b) pour former un bourrelet dans la zone de bordure de l'au moins une première et/ou seconde cavité d'outil (21a, 21b).

5. Procédé de fabrication selon la revendication 3 ou 4,
   **caractérisé en ce que,** à l'étape de procédé d'expansion du premier granulat de plastique expansible ou des premières perles de mousse expansibles, le processus d'expansion est terminé après une durée définie et le premier granulat de plastique ou les premières perles de mousse non encore fondus ou non encore expansés sont retirés de l'espace creux de moulage (22) de telle sorte que seule une couche du premier granulat de plastique expansé ou des premières perles de mousse expansées adhère à la couche de film (31).

6. Procédé de fabrication selon la revendication 5, **caractérisé en ce que,** après le retrait des parties non expansées du premier granulat de plastique ou des premières perles de mousse, la cavité de moulage (22) est remplie d'un second granulat de plastique expansible ou de secondes perles de mousse expansibles et ceux-ci sont ensuite expansés pour former le corps moulé en plastique (1).

7. Procédé de fabrication selon l'une des revendications précédentes, **caractérisé en ce que** le granulat (3) à l'étape de procédé B) est déposé sur l'au moins une cavité d'outil (21) au moyen d'un pistolet de pulvérisation (32).

8. Procédé de fabrication selon l'une des revendications précédentes, **caractérisé en ce que** l'au moins une cavité d'outil (21) à chauffer est chauffée à l'étape de procédé A) par l'intermédiaire de l'introduction d'un fluide de chauffage par l'intermédiaire de canaux de chauffage (24) correspondants dans l'au moins une cavité d'outil (21).

9. Procédé de fabrication selon l'une des revendications précédentes, **caractérisé en ce que,** à l'étape de procédé A), l'au moins une cavité d'outil (21) à chauffer est chauffée à au moins une température supérieure à la température de fusion du granulat (3), en particulier à une température dans la plage allant de 80 °C à 260 °C.

10. Procédé de fabrication selon l'une des revendications précédentes, **caractérisé en ce que,** à l'étape de procédé B), un granulat de plastique (3) thermoplastique sous forme de poudre est déposé sur l'au moins une cavité d'outil (21).

11. Procédé de fabrication selon l'une des revendications précédentes, **caractérisé en ce que** l'au moins une cavité d'outil (21) à chauffer est chauffée à l'étape de procédé A) par l'intermédiaire d'une source de chauffage externe (55) qui est disposée à distance de l'au moins une cavité d'outil (21), comme en particulier un radiateur rayonnant.

12. Procédé de fabrication selon l'une des revendications précédentes, **caractérisé en ce que,** à l'étape de procédé B), un granulat (3) est déposé proportionnellement uniquement sur des zones partielles définies de l'au moins une cavité d'outil (21) pour former au moins une couche de film (31) dans certaines zones, en particulier dans lequel des zones partielles de l'au moins une cavité d'outil (21) peuvent être recouvertes pour y empêcher un dépôt de granulat à l'étape de procédé B).

13. Procédé de fabrication selon l'une des revendications précédentes, **caractérisé en ce que,** à l'étape de procédé B), un granulat (3) comportant une épaisseur de couche (33) dans la plage allant de 0,05 mm à 2 mm est déposé sur la cavité d'outil (21).

14. Procédé de fabrication selon l'une des revendications précédentes, **caractérisé en ce que,** à l'étape de procédé E), l'au moins une cavité d'outil (21) à refroidir est refroidie par convection et/ou par conduction.

Fig.1

Fig.2

EP 4 045 260 B1

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009006507 B3
- GB 2494484 A
- JP S63312248 A
- GB 2460838 A
- DE 10033877 A1